# EUROPEAN PATENT SPECIFICATION

(11) **EP 1 352 707 B1**
(45) Date of publication and mention of the grant of the patent: **17.05.2006**
(21) Application number: 03007809.1
(22) Date of filing: 04.04.2003
(51) Int. Cl.: B24B 9/14, B24B 17/04, B24B 49/12, B24B 47/22

(54) **Apparatus for processing a lens**
Vorrichtung zur Bearbeitung eines Brillenglases
Dispositif de traitement de verre de lunettes

(30) Priority: 08.04.2002 JP 2002105564
(43) Date of publication of application: 15.10.2003
(73) Proprietor: HOYA CORPORATION, Shinjuku-ku, Tokyo 161-8525 (JP)
(72) Inventor: Wada, Toyoji, c/o Hoya Corporation, Tokyo, 161-8525 (JP)
(74) Representative: Kuhnen & Wacker

(56) References cited:
- EP-A- 1 138 436
- FR-A- 2 481 635
- US-A- 5 022 187
- US-A- 5 895 314
- US-B1- 6 168 505

## Description

### Field of the Invention

The present invention relates to an apparatus for processing a lens according to claim 1.

### Prior Art

From EP-A-1 138 436 a lens periphery etch processing apparatus is known which comprises lens rotating shafts for putting and holding an objective lens there between, furthermore a carriage rotateable around a pivot and grind stone rotating shaft provided with a grind stone for grinding the objective lens. The lens rotating shaft is provided with a reference globe having a predetermined radius. According to this known lens periphery etch processing apparatus the supporting means for supporting a lens is not freely displaceable towards a tool but only movable in a pivot type pattern. Moreover, with this known apparatus no detection means is provided, which detects through an amplified displacement the completion of the processing operation.

From US-A-5,022,187 a machine for grinding ophthalmic glasses, and more particularly a device for regulating the grinding weight for such machines is known. This known machine comprises an amplifying means for amplifying a relative displacement between a supporting means and a positioning means.

From US-B1-6,168,505 a polishing machine for spectacle lens edges is known, which has a machine support having a guide column. A grinding wheel is seated on a grinding spindle driven by a drive, wherein the grinding wheel, the grinding spindle, and the drive are arranged on the machine support and wherein the grinding wheel has a rotational axis.

Heretofore, when a lens such as a spectacle lens is processed so that the lens is fitted into a lens frame of a spectacle frame, the peripheral face of an uncut lens is ground by a grinder or cut by a cutler and the uncut lens is formed into a prescribed shape of the peripheral portion in accordance with data of the shape of the lens frame of the spectacle frame.

Examples of the known processing apparatus for this purpose include, as disclosed in Japanese Patent Application Laid-Open No. 2002-18686, apparatuses in which a rotating tool (a grinder) which can be freely rotated and grinds the peripheral face of the lens is disposed around a shaft on a base and the position of grinding or cutting is set by driving a shaft supporting the lens, which can be freely swung relative to the shaft of the rotating tool, towards the shaft of the rotating tool by an arm and rotating the lens around the axis thereof.

In these apparatuses, the depth of processing a lens is decided based on the data of the shape of the lens frame. An arm having a lens-holding shaft is swung to the angle in accordance with the depth of processing a lens. A sensor detecting that the angle of the arm has reached the angle corresponding to the prescribed processing depth is disposed and it is found that the prescribed shape of the peripheral portion has been formed.

### Object to be Solved by the Invention

However, the above apparatuses which have heretofore been used have a problem in that, since the completion of the prescribed shape of the peripheral portion is directly detected by the swing angle of the arm, it is difficult that the position of the complete processing is detected at a great accuracy when the change in the swing angle of the arm is very small (when the processing depth is very small) and, as the result, an error arises in the completed shape of the lens.

The present invention has been made to overcome the above problems and it is an object of the invention to provide an apparatus, which processes a lens in accordance with the data of the shape of the lens frame and exhibits an improved accuracy of processing a lens by detecting the completion of processing a lens with a great accuracy.

According to the present invention the above object is solved by the features of claim 1.

Improved embodiments of the inventive apparatus for processing a lens result from the subclaims.

The present invention provides an apparatus for processing a lens which processes a peripheral portion of a spectacle lens in accordance with data of a shape of a lens frame, the apparatus comprising supporting means for supporting a lens which can he freely displaced towards a tool and comprises a holding shaft which supports the lens in a manner such that the lens can be freely rotated, positioning means which can be brought into contact with and separated from the supporting means for supporting a lens and restricts the displacement of the supporting means for supporting a lens towards the tool at a position corresponding to an amount of processing a lens which is obtained based on a shape of a lens frame, amplifying means for amplifying a relative displacement between the supporting means for supporting a lens and the positioning means, and detection means which detects through the amplified displacement that processing to he conducted at a rotation angle has been completed when the supporting means for supporting a lens contacts the positioning means.

In accordance with the present invention, the processing amount is decided by displacing the positioning means in accordance with the rotation angle of the holding shaft and the data of the shape of the lens frame. The supporting means for supporting a lens is displaced towards a tool. The displacement of the supporting means for supporting a lens is restricted by the positioning means so that the processing amount (the processing depth) which is obtained based on the rotation angle and the data of a shape of a lens frame at the rotation angle is achieved. The processing proceeds and is completed in this manner. At this time, since the relative displacement between the supporting means for supporting a lens and the positioning means is amplified, the time when the supporting means for supporting a lens is brought into contact with the positioning means is detected at a great accuracy and the accuracy of processing the lens can be improved. When the processing is continued while the lens-holding shaft is rotated until the output of the detection means exhibits the completion at the entire peripheral portion, it is easily detected that the processing has been completed at the entire peripheral portion of the lens.

The reliability of the processing of the lens can be improved since the processing of the lens does not proceed beyond the position set by the positioning means.

An embodiment of the present invention will be described in the following with reference to the Figures.

### Brief Description of Drawings

- Fig. 1: shows a perspective view of the appearance of the apparatus for processing a lens as an embodiment of the present invention;
- Fig. 2: shows a perspective view exhibiting the main portions of the inner construction;
- Fig. 3: shows a perspective view exhibiting a base unit, an elevating and lowering unit and a lens unit in the inner construction;
- Fig. 4: shows a sectional view of the elevating and lowering unit and the lens unit in the vertical direction when the processing is started;
- Fig. 5: shows a sectional view of the elevating and lowering unit and the lens unit in the vertical direction when the processing is completed;
- Fig. 6: shows a sectional view of the elevating and lowering unit and the lens unit in the horizontal direction in the condition that the lens is held by the lens-holding shafts;
- Fig. 7: shows a sectional view of the elevating and lowering unit and the lens unit in the horizontal direction in the condition that the lens is released from the lens-holding shaft;
- Fig. 8: shows a block diagram exhibiting the control portion;

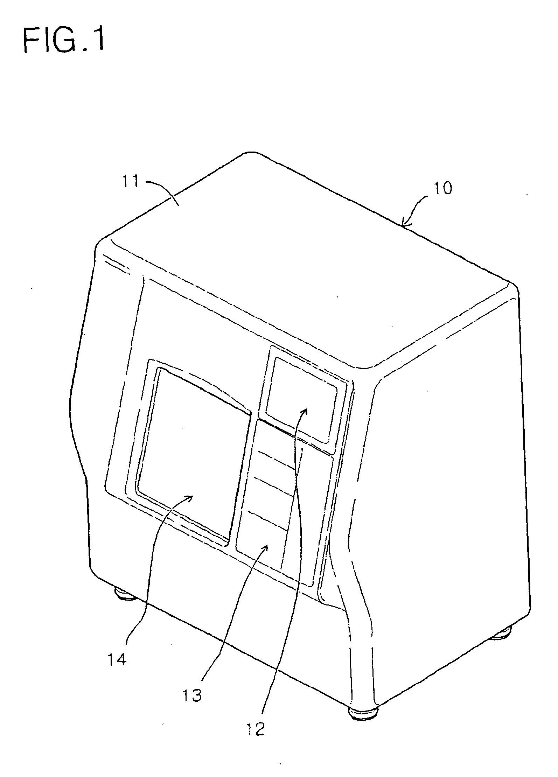

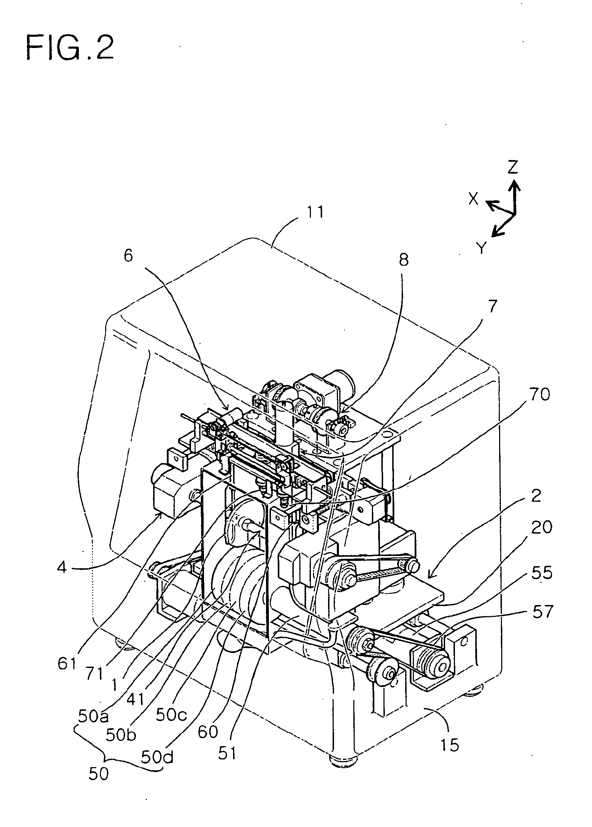

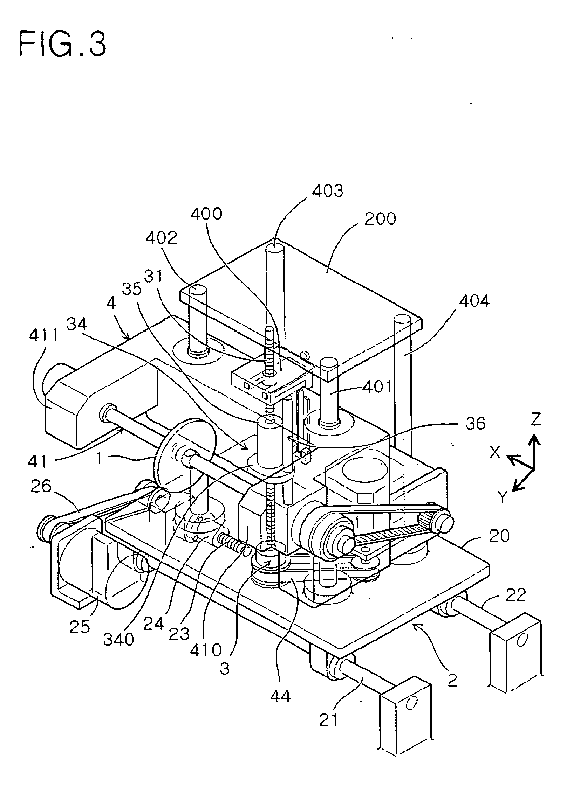

Fig. 1 shows a perspective view exhibiting the appearance of an apparatus for processing a lens 10. Fig. 2 and 3 show perspective views exhibiting the inner construction of the apparatus.

In Fig. 1, at the right side of the front of the apparatus for processing a lens 10 contained in a case having the shape of a rectangular parallel-epiped 11, an operation portion 13 for selecting or inputting the conditions for processing the lens and a display portion 12 for displaying information on the processing such as the data of the shape of the lens frame and the data for the processing are disposed. The operation portion 13 is constituted with touch panels, touch switches, keys or the like. The display portion 12 is constituted with LCD, CRT or the like.

At the front center of the apparatus for processing a lens 10, a door 14 which can be opened or closed as desired and used for inserting or taking out a lens is disposed.

After the entire apparatus is described, the members and the portions will be described in detail.

In Fig. 2, a base unit 2 which can be displaced in the direction parallel with a main shaft 51 having a main rotating tool 50 (the direction of the X-axis in the Figure) is disposed at the inside of the case 11. The base unit 2 supports a lens unit (a lens-holding unit) 4 which can be displaced in the vertical direction (in the direction of the Z-axis in the Figure).

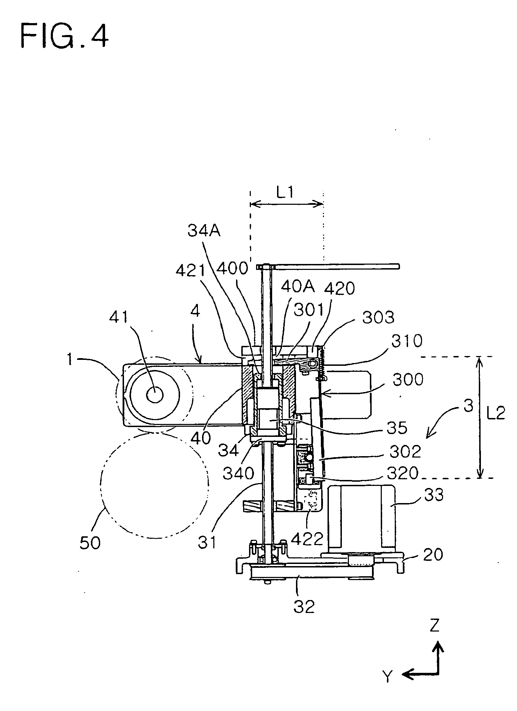

The direction from the right to the left in Fig. 2 (the transverse direction of the apparatus for processing a lens 10) is assigned to the X-axis, the vertical direction (the direction of the height of the apparatus) is assigned to the Z-axis, and the direction from the left to the right in Fig. 4 (the direction towards the inside of the apparatus) is assigned to the Y-axis. It is assumed that these axes orthogonally intersect each other.

In the lens unit 4, a lens-holding shaft 41 which is divided into two portions and selectively holds the center of the lens 1 between the two portions is disposed in a manner such that the lens-holding shaft can be rotated freely. The lens-holding shaft 41 is placed on the vertical line of a rotating tool (a grinder or a cutter) 50 which is supported by a shaft on a base plate 15. The lens-holding shaft 41 and the main shaft 51 of the main rotating tool 50 are arranged parallel with each other along the X-axis.

A measuring unit 6 comprising styluses 60 and 61 for measuring positions on the concave face and the convex face, respectively, of the lens 1 is fixed on the vertical line of the lens-holding shaft 41.

The styluses 60 and 61 can be displaced in the direction parallel with the lens-holding shaft 41. For the measurement of the position of the lens 1 after being completely processed, the styluses 60 and 61 are brought into contact with both faces of the lens 1 in the condition that the lens unit 4 is elevated and the lens unit 4 is elevated or lowered in accordance with the data of the shape of the lens frame while the lens-holding shaft is rotated.

For processing the lens 1, starting from the condition shown in Fig. 2, the lens unit 4 is lowered after the main rotating tool 50 is rotated and the peripheral portion (the outer peripheral portion) of the lens 1 is ground into the prescribed shape by elevating or lowering the lens unit 4 in accordance with the data of the shape of the lens frame while the lens-holding shaft 41 is rotated.

By elevating or lowering the lens unit 4 based on the data of the shape of the lens frame corresponding to the rotation angle of the lens-holding shaft 41, the grinding to the processing depth in accordance with the rotation angle of the lens 1 is conducted continuously. During the processing, the force of pressing the lens 1 to the main rotating tool 50 (the processing pressure) is provided by the weight of the lens unit 4 itself. The adjustment of the processing pressure in accordance with the material of the lens is conducted by supporting a portion of the weight of the lens unit 4 by a unit for controlling the processing pressure 8 disposed at a position above the lens unit 4.

The position of contact between the lens 1 and the main rotating tool 50 is changed by displacing the base unit 2 in the direction of the X-axis in the Fig. and the selection between the flat grinding and the beveled grinding can be made. The switching between the rough grinding and the finishing grinding can also be made similarly.

A finishing unit 7 which can be displaced in the direction of the Y-axis is disposed at a position above the lens unit 4. When the finishing unit is at the advanced position, a rotating tool for chamfering 70 and a rotating tool for grooving 71 are placed at a position directly above the lens-holding shaft 71. The selection between the rotating tools 70 and 71 is made and the position of the processing is set by elevating the lens unit 4 and driving the base unit 2 in the direction of the X-axis. The finishing is conducted in this condition.

The portions will be described in more detail in the following.

In Fig. 2, 3 and 4, the main shaft 51 in which the rotating tool (a grinder or a cutter having diamond or the like) 50 is disposed and a motor 55 for driving the main shaft 51 are fixed to the base plate 15 at the inside of the case 11. The main shaft unit is constituted with these members as the main components.

The main shaft 51 is, as shown in Fig. 2, supported by a shaft on the base plate 15 along the X-axis in a manner such that the main shaft 51 can be rotated freely and is disposed parallel with the lens-holding shaft 41.

At the end portion of the main shaft 51, a main rotating tool 50 for mechanically processing the lens 1 is attached. The main rotating tool 50 is placed at the central portion in the direction of the X-axis in Fig. 2 and at the front side of the apparatus (at the lower left side in the Figure). The base end portion of the main shaft (at the right side in the Figure) is driven by a motor 55 via a belt 57 and pulleys.

In the main rotating tool 50 which mechanically processes the lens 1, as shown in Fig. 2, a rough grinder for flat grinding 50a, a finishing grinder for flat grinding 50b, a rough grinder for beveled grinding 50c and a finishing grinder for beveled grinding 50d are disposed successively from the side of the tip of the main shaft 51 (the left side in the Figure). The grinding may also be conducted by using cutters as the rotating tool in place of the grinders.

A base unit 2 for driving the lens unit 4 in the direction of the X-axis is disposed at a position inside the main shaft 51 in Fig. 2 (in the direction of the Y-axis, at the right side in the Figure).

As shown in Fig. 3, the base unit 2 is constituted with a base 20 which can be displaced in the direction of the X-axis and a servomotor 25 (hereinafter, referred to as an X-axis motor) which controls the positioning by driving the base 20 in the direction of the X-axis as the main components.

The base 20 is disposed on guide members 21 and 22 which are fixed on the base plate 15 in the direction of the X-axis in a manner such that the base 20 can be freely displaced. Therefore, the base 20 can be freely displaced in the direction of the X-axis.

In Fig. 3, an inner screw 23 is disposed at a position below the base 20 between the guide members 21 and 22 in a manner such that the inner screw 23 can be rotated freely. An outer screw 24 fixed at the lower face of the base 20 is engaged with the inner screw 23 and the base 20 is driven in the direction of the X-axis by rotation of the screw 23.

One end of the inner screw 23 and the X-axis motor 25 are connected to each other via a gear and a cogged belt 26 and the base 20 is positioned in the direction of the X-axis in accordance with the rotation angle of the X-axis motor 25.

As shown in Fig. 3, four poles 401 to 404 stand on the base 20. Among the four poles, the two poles 401 and 402 penetrate a frame 40 of the lens unit 4 and guide the lens unit 4 in the vertical direction (the direction of the Z-axis) in a manner such that the lens unit 4 can be displaced freely.

As shown in Fig. 3 and 4, the lens unit 4 is driven in the vertical direction and positioned in the vertical direction by the elevating and lowering unit 3 which is displaced in the direction of the Z-axis. The lens unit 4 is positioned in the direction of the X-axis by the base unit 2.

The elevating and lowering unit 3 is, as shown in Fig. 3, 4 and 6, constituted with a screw 31 which is supported by a shaft on the base 20 between the poles 401 and 402 and penetrates the frame 40 of the lens unit 4 in the vertical direction, a positioning member 34 which is engaged with the screw 31 at the inner peripheral portion and can support the lens unit 4 by contacting the frame 40 of the lens unit 4 at the upper end and a servomotor 33 (hereinafter, referred to as a Z-axis motor) which is connected to the lower end of the screw 31 via a cogged belt 32 and a gear, as the main components. The elevating and lowering unit 3 is disposed on the base 20.

In the elevating and lowering unit 3, the screw 31 is rotated by driving the Z-axis motor 33 and the positioning member 34 having an outer screw 35 engaged with the screw 31 is driven in the direction of the Z-axis. The outer screw 35 is displaced in the direction of the Z-axis since the rotating movement in the circumferential direction is restricted by a mechanism at the lens unit 4 as shown later.

As shown in Fig. 4, the positioning member 34 contacts the inner periphery of a hole portion 40A formed in the frame 40 of the lens unit 4 in the vertical direction in a manner such that the positioning member 34 can slide and make a relative displacement in the vertical direction.

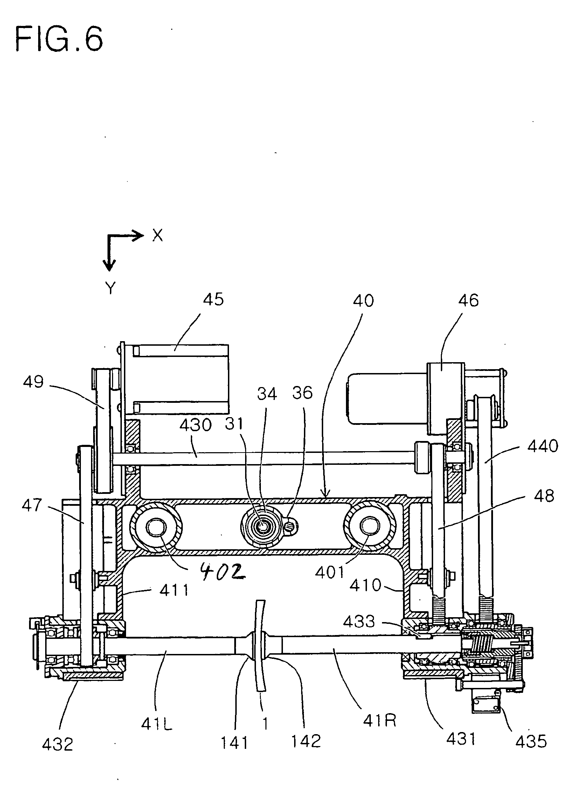

At the upper end of the hole portion 40A, a ceiling portion 400 connected to the frame 40 is disposed. As shown in Fig. 3 and 6, at the side of the outer screw 35 of the positioning member 34, a stopper 36 standing in the direction of the Z-axis is disposed at a position such that the stopper 36 can contact the lower face of the ceiling portion 400.

In Fig. 3, the stopper 36 protruding from the upper portion of the positioning member 34 contacts the lower face of the ceiling portion 400 and the weight of the lens unit 4 applied by the ceiling portion 400 is supported by the positioning member 34 comprising the stopper 36 and the outer screw 35. The outer screw 35 and the stopper 36 are connected to each other at each base portion through a base 340.

As shown in Fig. 6, the hole portion 40A of the frame 40 has a sectional shape such that the positioning member 34 and the stopper 36 are stopped by each other around the Z-axis (in the direction perpendicular to the plane of Fig. 6) and the idle rotation of the outer screw 35 by the rotation of the screw 31 is prevented. In other words, the stopper 36 fixed at the side of the outer screw 35 is arrested by the hole portion 40A and the rotation of the positioning member 34 is prevented. Thus, the outer screw 35 is elevated or lowered by the rotation of the screw 31 and the positioning member 34 is displaced in the direction of the Z-axis due to this movement.

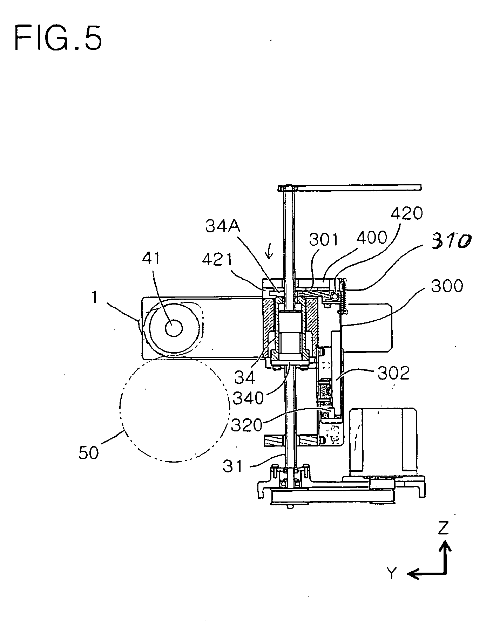

When the stopper 36 does not contact the ceiling portion 400, as shown in Fig. 5, the lens 1 supported by the lens unit 4 is brought into contact with the main rotating tool 50 and the weight of the lens unit 4 itself is applied as the processing pressure. The upper end face 34A of the positioning member 34 and the lower face of the ceiling portion 400 do not contact each other and a prescribed gap is formed.

At a position below the ceiling portion 400 faced to the gap, a hole portion 421, where one end of a sensor arm 300 (the amplifying means for amplifying a relative displacement) for detecting completion of the processing on the lens unit (in the vertical direction) is inserted, is disposed along the Y-axis in the Fig. in a manner such that the hole portion 421 penetrates the frame 40 across the hole portion 40A.

The sensor arm is, as shown in Fig. 4 and 5, an integrally formed arm having the shape of an inverse L which is composed of an arm 301 extending to the left side in the Figures (in the direction of the Y-axis) and inserted into the hole portion 421 and an arm 302 extending in the lower direction in the Fig. (in the direction of the Z-axis, to the side of the base 20). The arm 301 and the arm 302 are disposed approximately perpendicularly to each other.

The length of the arm 302 in the vertical direction is set longer than that of the arm 301 in the horizontal direction.

A bending portion 303 at the middle of the sensor arm 300 having the shape of an inverse L is supported by a shaft 420 disposed at the ceiling portion 400 of the lens unit 4 in a manner such that the bending portion 303 can freely swing around the shaft 420 and, therefore, the sensor arm can swing around the X-axis.

Between the arm 302 extending in the direction of the Z-axis and the ceiling portion 400, a spring 310 which pushes the arm 301 extending in the direction of the Y-axis in the lower direction in Figs. 4 and 5 (in the counter-clockwise direction in the Figures) is disposed.

Since the arm 301 inserted into the hole portion 421 crosses the hole portion 40A in the direction of the Y-axis, a penetrating portion through which the screw 31 is inserted is formed and the lower face of the arm 301 faced to the inner periphery of the hole portion 40A can be brought into contact with or separated from the upper end face 34A of the positioning member 34.

Since the sensor arm 300 is pushed in the counter-clockwise direction in the Fig.s by the spring 310, as shown in Fig. 4, the tip of the arm 301 is brought into contact with the lower side of the hole portion 421 and stopped there in the condition that the upper end face 34A of the positioning member 34 and the arm 301 are separated from each other (in the condition that the stopper 36 is separated from the ceiling 400).

On the other hand, as shown in Fig. 5, in the condition that the stopper 36 of the positioning member 34 contacts the ceiling portion 400 of the lens unit 4 (in the condition that the stopper 36 contacts the ceiling portion 400 as shown in Fig. 3), in other words, in the condition that the positioning member 34 supports the lens unit 4, the upper end face 34A of the positioning member 34 pushes the arm 301 in the upper direction. In this condition, the sensor arm 300 rotates and the arm 302 extending in the direction of the Z-axis is placed at the prescribed position (for example, a position in the vertical direction as shown in Fig. 5).

A bracket 422 protruding along the lower portion of the sensor arm 300 (the arm 302) is disposed at the frame 40. At the prescribed position of the bracket 422 which can be faced to the lower end of the arm 302 swinging around the X-axis, a sensor for detecting completion of the processing 320 which detects the free end portion of the arm 302 swinging around the X-axis is disposed at a position approximately below the shaft 420. The free end portion means the end portion of the sensor arm 300 which is detected by the sensor for detecting completion of the processing 320 and, in the present embodiment, is the end portion of the arm 302.

The sensor for detecting completion of the processing 320 is, for example, constituted with a photosensor such as a photointerruptor. As shown in Fig. 5, when the swinging arm 302 comes to the prescribed position (the position in the vertical direction where the lens unit 4 and the positioning member 34 are brought into contact with each other) and the light of the photointerruptor of the sensor for detecting completion of the processing is interrupted, the sensor is switched at ON and it is detected that the processing has been completed.

As for the lengths of the arms from the swing shaft in the shape of an inverse L, the distance L2 from the swing shaft 420 to the position where the free end portion of the arm 302 is faced to the sensor for detecting completion of the processing 320 (refer to Fig. 4) is set longer than the distance L1 from the swing shaft 420 to the position where the arm 301 is brought into contact with the upper end face 34A of the positioning member 34 (refer to Fig. 4). The amount of the relative displacement of the arm 301 which detects the relative displacement between the lens unit 4 and the positioning member 34 is amplified in accordance with the ratio of L2 to L1 (hereinafter, referred to as the lever ratio; L2/L1) and the lower end of the arm 302 is displaced by the amplified amount.

As described above, the weight of the lens unit 4 itself is used as the processing pressure for the lens 1. The lens unit 4 is just guided by the poles 401 and 402 in a manner such that the displacement can be made in the vertical direction. As shown in Fig. 4, when the positioning member 34 is lowered and left below the lens unit 4, the lens 1 is brought into contact with the main rotating tool 50. The weight of the lens unit 4 itself is applied to the lens and the grinding starts.

When the screw 31 is rotated and the positioning member 34 is lowered and placed at the position providing the prescribed processing depth, as shown in Fig. 4, a gap is formed between the upper end face 34A of the positioning member 34 and the lower face of the arm 301 and the axis of the lens 1 slowly approaches the main rotating tool 50 as the lens 1 is ground under the weight of the lens unit 4 itself. In this condition, the sensor arm 300 is pushed in the counter-clockwise direction and the arm 301 is stopped at the lower face of the hole portion 421. The lower end of the arm 302 is placed at a position separated from the sensor for detecting completion of the processing 320 and the output of the sensor for detecting completion of the processing 320 is indicated as OFF.

When the lens 1 has been ground to the prescribed depth as the result of the grinding as shown in Fig. 5, the lens unit 4 tends to be lowered further due to the weight thereof. However, the further displacement of the lens unit 4 towards the main rotating unit 50 is restricted by the positioning member 34.

When the lens unit 4 is lowered, the upper end face 34A of the positioning member 34 pushes the arm 301 in the upper direction. The sensor arm 300 is rotated in the counter-clockwise direction and the arm 302 amplifies the relative displacement between the lens unit 4 and the positioning member 34 by the prescribed lever ratio. The arm 302 passes through the sensor for detecting completion of the processing 320 and the sensor for detecting completion of the processing 320 is switched at ON. In this manner, it is detected that the displacement of the lens unit 4 is restricted by the positioning member 34, i.e., that the position of the complete processing has been reached.

Since the distance between the position of the lens unit 4 in the vertical direction and the position of the positioning member 34 in the vertical direction (the processing depth) is amplified by the lever ratio described above in the swing of the arm 302, it is detected with a great accuracy by the sensor for detecting completion of the processing 320 that the prescribed processing depth has been achieved.

The elevating and lowering unit 3 supports the lens unit 4 in the elevating direction. After the lens unit 4 starts the processing of the lens 1, the processing depth (the processing amount) is decided by the position of the elevating and lowering unit 3 in the direction of the Z-axis.

The lens unit 4 which is displaced by the elevating and lowering unit 3 in the direction of the Z-axis is, as shown in Fig. 3, guided by the two poles 401 and 402 standing on the base 20 in the vertical direction (in the direction of the Z-axis) in a manner such that the lens unit can be freely displaced and is constituted with the lens-holding shaft 41 which is divided into two portions, a motor 45 for driving the lens which rotates the lens-holding shaft 41 and a motor for the lens chuck 46 which changes the pressure of the lens-holding shaft 41 to hold the lens 1, as the main components

As shown in Fig. 4, the lens-holding shaft 41 which holds and rotates the lens 1 is placed at a position directly above the main rotating tool 50. The direction connecting the axial line of the lens-holding shaft 41 and the axial line of the main shaft 51 is in the vertical direction.

To the frame 40 of the lens unit 4, as shown in Fig. 3 and 6, arms 410 and 411 protruding in the direction of the front of the apparatus (to the lower left side of Fig. 3) are disposed and the frame 40 and the arms 410 and 411 form a rectangle having three sides and open to one side. The arms 410 and 411 support the lens-holding shaft 41.

In Fig. 3 and 6, the lens-holding shaft 41 is divided into two portions at the center, i.e., a shaft 41R supported by the arm 410 and a shaft 41L supported by the arm 411. The arm 41L is supported by the arm 411 at the left side in Fig. 6 in a manner such that the arm 41L is freely rotated. The arm 41R is supported by the arm 410 at the right side in Fig. 6 in a manner such that the arm 41L is freely rotated and can be displaced in the axial direction (in the direction of the X-axis).

The shafts 41L and 41R are rotated by the motor 45 for driving the lens via cogged belts 47, 48 and 49. The cogged belts 47 and 48 are connected to each other through a shaft 430 and the rotation angles of the shafts 41L and 41R are synchronized.

For this purpose, a gear 432 engaged with the cogged belt 47 is fixed to the shaft 41L and a gear 431 engaged with the cogged belt 48 is fixed to the shaft 41R. So that the shaft 41R can be displaced relative to the arm 410 in the direction of the X-axis, the shaft 41R is arrested in the direction of rotation by the key 433 disposed between the shaft 41R and the inner periphery of the gear 431 and, on the other hand, can be relatively displaced in the direction of the X-axis.

In Fig. 6, a chuck mechanism driven by a motor for the lens chuck 46 is disposed at the end portion (at the right side in the Figure) of the shaft 41R.

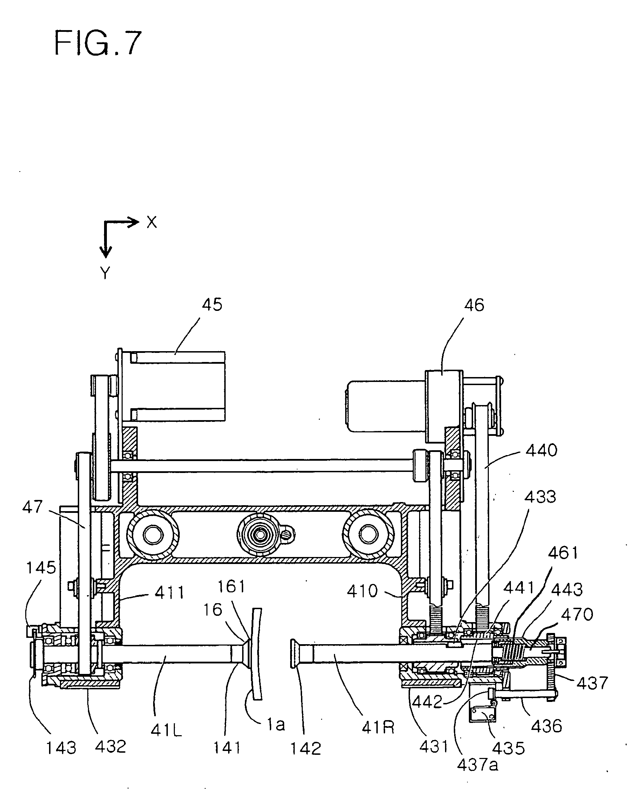

In the chuck mechanism, as shown in Fig. 7, an outer screw 442 is formed at the inner periphery of a gear 441 engaged with the cogged belt 440. The outer screw 442 is engaged with an inner screw portion 443 formed at a driving member 461 which can be brought into contact with the shaft 41R in the axial direction.

The position of rotation of the shaft 41R is decided by the motor for driving the lens 45 connected to the cogged belt 48. As for the position of the shaft 41R in the axial direction, as will be described later, the gear 441 is rotated by the rotation of the motor for the lens chuck 46 and the inner screw portion 443 of the driving member 461 engaged with the outer screw 442 is displaced in the axial direction. Due to this displacement, the shaft 41R is pushed in the direction of the X-axis by the driving member 461 and the end portion of the shaft 41R is brought into contact with the lens 1. The pressure of holding the lens with the shaft 41R and the shaft 41L (the holding pressure) can be set at a desired value by the motor for the lens chuck 46. In the present embodiment, the holding pressure for the lens 1 is set by the value of the electric current driving the motor for the lens chuck 46.

In Fig. 7, a receiver of the lens holder 141 is fixed at the tip of the left shaft 41L of the lens-holding shaft 41. To the receiver of the lens holder, a lens holder 16 to which the lens 1 has been fixed in advance is attached. The lens holder 16 can be attached or released freely.

On the other hand, the shaft 41R disposed on the same axial line with that of the shaft 41L moves in the direction of the X-axis and holds the lens at the tip. In other words, the shaft 41R moves towards the lens 1 by being driven by the motor for the lens chuck 46 and presses the lens 1 with a lens presser 142 disposed at the tip. The lens 1 is pressed towards the lens-holding shaft 41L and held between the two shafts. The lens presser 142 is made of a resin having elasticity such as rubber.

At the end face of the lens holder 16 which is formed into a concave shape, the convex face 1a of the lens 1 is coaxially adhered via a double faced adhesive pad 161 and the lens presser 142 presses the concave face 1b of the lens 1. The lens presser 142 is attached to the tip of the shaft 41R holding the lens in a manner such that the lens presser can be swung in any desired direction and the concave face 1b of the lens 1 is pressed with excellent balance without local concentration of the pressure.

As shown in Fig. 7, starting from the condition in which the lens holder 16 having the lens 1 fixed thereto is attached to the shaft 41L, the lens 1 is held by the lens presser 142 in the following manner: the motor for the lens chuck 46 is driven in the prescribed direction (the positive rotation); the gear 441 is rotated in the positive direction due to this movement; and the shaft 41R is displaced to the left side in Fig. 9 by the relative rotation of the outer screw 442 at the inner periphery of the gear 441 and the inner screw portion 443 of the shaft 41R. In the driving member 461 having the inner screw 443, a sensor rod 435 placed parallel with the shaft 41R from a plate 337 disposed at the end portion and protruding to the side of the shaft 41L prevents rotation of the inner screw 443 since the sensor rod 435 is arrested in the direction of rotation by the arm 410 and the driving member 461 is driven in the axial direction alone.

By the displacement of the shaft 41R in the direction of the left side, the driving member 461 pushes the shaft 41R, which is thereby displaced in the direction of the X-axis alone and presses the lens presser 142 to the concave face 1b of the lens 1.

When the motor for the lens chuck 46 is further rotated, the force for pressing the lens 1 increases and the electric current consumed by the motor for the lens chuck 46 increases. The pressure of holding the lens 1 is set at a desired value by detecting the electric current.

On the other hand, when the processing is completed, the motor for the lens chuck 46 is rotated in the reverse direction and the shaft 41R is driven to the right side in Fig. 6. The lens presser 142 is separated from the lens 1 and a prescribed gap is formed between the lens 1 and the lens presser 142 as shown in Fig. 7. The shaft 41R is displaced to the waiting position which allows attachment and detachment of the lens 1 and the lens holder 16. When the driving member 461 is displaced in the direction of the right side in the Fig. by a snap ring (not shown in the Figure) or the like disposed at a shaft portion having a small diameter 470 which protrudes from the tip of the shaft 41R to the right side in the Figure, the shaft portion 470 is pulled by the driving member 461 and displaced to the right side.

Since the shaft 41R of the lens-holding shaft 41 is displaced in the direction of the X-axis, it is necessary that the position of the shaft 41R be found. When the shaft 41R moves towards the lens 1, it is detected by a sensor not shown in the Fig. that the lens-holding shaft 41 contacts the lens 1 and the pressure of holding the lens 1 is found by monitoring the electric current of the motor for the lens chuck 46. When the shaft 41R moves to the left side towards the waiting position shown in Fig. 7, the prescribed waiting position is detected by a limit switch 435 disposed at the arm 410 of the lens unit 4.

In Fig. 7, the limit switch 435 is fixed to the arm 410 at the position supporting the gear 441.

At the right end portion of the shaft 41R which is the portion of the lens-holding shaft 41 pressing the lens, a sensor rod 435 is disposed via a plate 437 parallel with the shaft 41R and protrudes to the side of the shaft 41L. At the end portion of the sensor rod 435, a detecting portion 437a which can contact the limit switch 435 at the prescribed waiting position is formed.

When the shaft 41R moves to the right side in the Figure, the sensor rod 435 fixed to the shaft 41R also moves to the right side. As shown in Fig. 7, the position where the detecting portion 437a contacts the limit switch 435 is the waiting position of the shaft 41R and the limit switch 435 is switched at ON at this position.

Then, to decide the processing depth in accordance with the rotation angle of the lens 1, the shaft 41L penetrates the arm 411 and a slit plate 143 is fixed at the end portion protruding from the arm 411. By detecting the position of rotation of the slit plate 143 by a photosensor 145 (a lens position sensor) fixed to the arm 411, the position (the rotation angle) of the lens 1 held by the lens-holding shaft 41L is detected.

In the lens unit 4 having the construction described above, when the lens 1 is fixed at the receiver of the lens holder 141, the motor for the lens chuck 46 is driven and the lens-holding shaft 41R is moved to the left side of Fig. 7. The lens 1 is fixed by pressing the lens 1 by the lens presser 142 under the pressure.

As shown in Fig. 3, the main rotating tool 50 is fixed to the base plate 15 and is not displaced. The lens 1 supported by the lens unit 4 is displaced in the vertical direction relative to the main rotating tool 50 by the displacement of the elevating and lowering unit 3 in the direction of the Z-axis and the processing can be conducted to the desired depth.

The position of the lens 1 for the processing can be changed by changing the rotation angle of the motor for driving the lens 46 and the peripheral portion of the lens can be processed to the desired processing depth.

The tool used for the processing can be changed by changing the position of contact between the lens 1 and the main rotating tool 50 by the displacement of the base 20 in the direction of the X-axis.

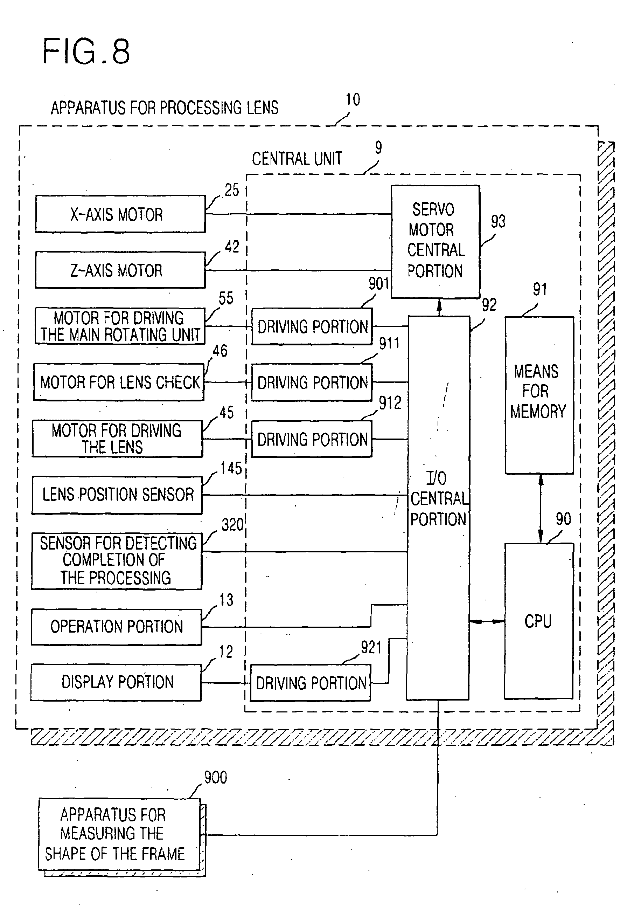

The apparatus for processing a lens 10 is constituted with the various mechanisms (units) described above and further has a control unit 9 for controlling the mechanisms as shown in Fig. 8.

In Fig. 8, the control unit 9 is constituted with a microprocessor (CPU) 90, a means for memory (a memory, a hard disk and the like) 91 and an I/O control portion (an interface) 92 connected to the motors and the sensors as the main components. The control unit 9 reads the data of the shape of the lens frame sent from the apparatus for measuring the shape of the frame 900 placed at the outside. The control unit 9 also reads the data from various sensors and drives the various motors so that the prescribed processing is conducted based on the properties (the material, the hardness and the like) of the lens 1 set by the operation portion 13. As the apparatus for measuring the shape of the frame, an apparatus such as the apparatus disclosed in Japanese Patent Application Laid-Open No. Heisei 6(1994)-47656 can be used.

The control unit 9 comprises a servomotor control portion 93 which positions the lens unit 4 in the directions of the X-axis and the Z-axis by driving the X-axis motor 25 of the base unit 2 and the Z-axis motor 42 of the elevating and lowering unit 3.

The motor 55 for driving the main rotating unit 50 is connected to the I/O control portion 92 via driving portion 901 and the condition of rotation or the speed of rotation is controlled in accordance with the direction from the microprocessor 90.

The motor for the lens chuck 46 which controls the holding pressure applied to the lens 1 by changing the length of the shaft 41R of the lens-holding shaft 41 is connected to the I/O control portion 92 via a driving portion 911 which controls the holding pressure in accordance with the electric current of driving.

The motor 45 for driving the lens is connected to the I/O control portion 92 via a driving portion 912 which controls the rotation angle of the lens-holding shaft 41 (the lens 1). The microprocessor 90 directs the position of processing the lens 1 based on the data of the shape of the lens frame obtained from the apparatus for measuring the shape of the frame 900, detects the rotation angle of the lens 1 by the sensor for detecting the position of the lens 145 and drives the Z-axis motor 42 so that the processing depth in accordance with the rotation angle based on the data of the shape of the lens frame is achieved.

When the prescribed processing depth is achieved, a sensor for detecting completion of processing 320 which will be described later is switch at ON and the microprocessor 90 decides that the processing in accordance with the rotation angle of the lens has been completed.

The operation portion 13 disposed at the front of the cover of the apparatus for processing a lens 10 is connected to the I/O control portion 92 and transfers the directions from the operator (the material of the lens 1 and the processing with or without the beveled processing or the grooving) to the microprocessor 90. The microprocessor 90 outputs the response to the directions and the information of the content of the processing to the display portion 12 via the driving portion 921.

By the control portion 9, data for flat grinding and data for beveled grinding which are used for the flat grinding and the beveled grinding, respectively, are created from the data of the shape of the lens frame. Further, data for grooving and data for chamfering are created by calculation based on the positions of the entire peripheral portion (coordinates of apices at the side of the convex face 1a and at the side of the concave face 1b) of the lens 1 which are measured by the measuring unit 6 based on the data of the shape of the lens frame.

During the processing, the servomotor control portion 93 drives the X-axis motor and the Z-axis motor in accordance with the data for the processing corresponding to the rotation angle of the lens 1 (the lens-holding shaft 41) which is detected by the sensor for detecting the position of the lens 145 and the lens 1 is displaced relative to the rotating tool. The processing is conducted in this manner.

The procedures of the processing by the apparatus for processing a lens 10 will be described in the following.

The lens 1 is set into the lens-holding shaft 41. The data of the shape of the lens frame are read at the apparatus for measuring the shape of the frame at the outside, the direction on the conditions of the processing (the material of the lens 1 and the processing with or without the beveled processing or the grooving) is received from the operation portion 13, and the direction for starting the processing is further received from the operation portion 13. Then, the procedures of the processing are conducted.

When the start of the processing is directed, the pressing shaft 41R of the lens-holding shaft 41 is displaced to the position for holding the lens shown in Fig. 6 by driving the motor for the lens chuck 46 and the holding pressure is set in accordance with the material.

For processing the lens 1, the main rotating tool 50 is rotated by driving the motor 55. The lens unit 4 is lowered by driving the elevating and lowering unit 3 in accordance with the processing amount (the cutting amount) obtained based on the rotation angle of the lens 1 (the output of the photosensor 145) and the data of the shape of the lens frame. The base unit 2 is displaced in the direction of the X-axis to the position where the peripheral portion of the lens 1 is faced to the rough grinder for flat grinding 50a of the main rotating tool 50. The processing depth is provided by the elevating and lowering unit 3 while the lens is rotated by the motor for driving the lens 45 and the rough grinding is conducted to the processing depth calculated at every rotation angle of the lens-holding shaft 41.

When the sensor for detecting completion of the processing 320 of the above lens unit 4 gives ON on the entire periphery, it is detected that the grinding has been completed.
When the rough processing is completed, the lens unit 4 is temporarily elevated. The base unit 2 is moved in the direction of the X-axis to the position where the lens 1 is faced to the finishing grinder for flat grinding 50b of the main rotating tool 50 and the grinding is conducted in the same manner as that conducted for the rough grinding. When the sensor for detecting completion of the processing 320 of the above lens unit 4 gives ON on the entire periphery, the processing on the entire peripheral portion of the lens 1 is completed.

Thereafter, grooving and chamfering are conducted by the finishing unit 7.

As described above, the lens unit 4 which can be displaced in the vertical direction is elevated or lowered by the elevating and lowering unit 3 which can be brought into contact with or separated from the lens unit 4 in the vertical direction. The elevating and lowering unit 3 is lowered from the position where the lens 1 is brought into contact with the main rotating tool 50 further to the position in the vertical direction corresponding to the prescribed processing depth and the lens 1 is ground under the vertical pressure formed mainly by the weight of the lens unit 4.

As shown in Fig. 4 and 5, for detection of the position of the complete processing, the sensor for detecting completion of the processing 320 having a sensor arm 300 is fix to the lens unit 4. The sensor arm 300 has the shape of an inverse L and is supported at the lens unit 4 in a manner such that the sensor arm 300 can be freely swung. One end portion of the sensor arm 300 can be brought into contact with or separated from the positioning member 34 of the elevating and lowering unit 3, Based on the position of the swing of the other end portion of the sensor arm 300, it is detected that the lens unit 4 has reached the prescribed processing depth.

Since the distance from the swing shaft 420 to the detecting position of the sensor for detecting completion of the processing 320 is set longer that the distance from the swing shaft 420 to the position where the sensor arm is brought into contact with the positioning member 34, the displacement in the direction of the Z-axis of the arm 301 for detecting the relative displacement in the direction of the Z-axis between the lens unit 4 and the positioning member 34 is amplified and the lower end portion of the arm 302 can be swung by the amplified value. Therefore, the position of the complete processing can be detected at a great accuracy and the accuracy of processing the lens 1 can be improved.

In the above embodiment, the sensor arm 300 has the shape of an inverse L. This shape is used for preventing an increase in the size in the inner direction (in the direction of the Y-axis) since mechanisms of the apparatus for processing a lens are vertically arranged. When the mechanisms are horizontally arranged, it is natural that the sensor arm may have a linear shape. The angle between the sensor arm 301 and the sensor arm 302 can be suitably set in accordance with the arrangement of the mechanisms.

In the above embodiment, the sensor arm 300 is supported by the lens unit 4. Alternatively, the sensor arm may be supported by the elevating and lowering unit 3.

In the above embodiment, the present invention is applied to the apparatus in which the processing of the lens 1 is conducted by displacing the lens-holding shaft 41 in the vertical direction. The present invention can also be applied to an apparatus having an arm which supports a lens-holding arm in a manner such that that the lens-holding arm can be swung in a conventional manner. For example, when an arm and a positioning member deciding the angle of the arm can be set in a manner such that the arm and the positioning member can be brought into contact with or separated from each other, the relative displacement between the arm and the positioning member is detected after being amplified by a sensor arm, and the position of the contact between the arm and the positioning member is detected based on the relative displacement amplified by the sensor arm, the same effect as that described for the above embodiment can be obtained. The present invention can be applied in the same manner to apparatuses in which a lens-holding shaft is displaced in the horizontal direction.

In the above embodiment, the sensor for detecting completion of the processing 320 is disposed at the lens unit 4 which supports the sensor arm in a manner such that the sensor arm can be swung. Since the lens unit 4 and the positioning member 34 contact each other at the position of the complete processing, the sensor for detecting completion of the processing 320 may be disposed at the positioning member 34.

The embodiments disclosed above are exhibited as examples and it should be considered that the present invention is not restricted to the embodiments. The scope and the range of the present invention are shown not by the above descriptions of the embodiments but by the claims. Any variations within and equivalent to the range of the claims are included in the present invention.

### List of reference numbers

- 1:: A lens
- 2:: A base unit
- 3:: An elevating and lowering unit
- 4:: A lens unit
- 5:: A unit of rotating tools
- 6:: A measuring unit
- 7:: A finishing unit
- 8:: A unit for controlling the processing pressure
- 10:: An apparatus for processing a lens
- 11:: A cover
- 12:: A display portion
- 13:: An operation portion
- 14:: A door
- 34:: A positioning member
- 40:: A frame
- 300:: A sensor arm
- 320:: A sensor for detecting completion of the processing.

## Claims

1. An apparatus for processing a lens which processes a peripheral portion of a spectacle lens (1) in accordance with data of a shape of a lens frame, the apparatus comprising:
a) supporting means (4, 16, 41) for supporting the lens (1) which can be freely displaced towards a tool (5) and comprises a holding shaft (41) which supports the lens (1) in a manner such that the lens (1) can be freely rotated and an angle detecting means (145) which detects a rotation angle of the holding shaft (41);
b) a positioning means (34) which can be brought into contact with and separated from the supporting means (4, 16, 41) for supporting the lens (1) and restricts the displacement of the supporting means (4, 16) for the lens (1) towards the tool (5) at a position corresponding to an amount of processing the lens (1) which is obtained based on the rotation angle and the data of the shape of the lens frame at the rotation angle;
c) an amplifying means (302) for amplifying a relative displacement between said supporting means (4, 16, 41) for supporting the lens (1) and the positioning means (34); and
d) detection means which detects through the amplified displacement that processing to be conducted at the rotation angle has been completed when the supporting means (4, 16, 41) for supporting the lens (1) contacts the positioning means (34).

2. An apparatus according to claim 1, wherein the tool (5) is disposed at a position directly below the supporting means (4,16, 41) for supporting the lens (1), the supporting means (4, 16, 41) for supporting the lens (1) is freely displacable in a vertical direction, and the positioning means (34) restricts downward displacement of the supporting means (4, 16, 41) for supporting the lens (1) in the vertical direction.

3. An apparatus according to any one of claims 1 and 2, wherein the amplifying means (302) for amplifying a relative displacement comprises a swinging member which contacts a means selected from said supporting means (4, 16, 41) for supporting a lens (1) and the positioning means (34) and is supported by a swing shaft disposed on an other means selected from the supporting means (4, 16, 41) for supporting the lens (1) and the positioning means (34), and a distance between the swing shaft and a position where the swinging member contacts the means selected from the supporting means (4, 16, 41) for supporting the lens (1) and the positioning means (34) is set smaller than a distance between the swing shaft (302) and a free end portion of the swinging member.

4. An apparatus according to claim 3, wherein the detection means detects passage of the free end portion of the swinging member.

5. An apparatus according to claim 4, wherein the swinging member is supported by the swing shaft (302) disposed at the supporting means (4, 16, 41) for supporting the lens (1), the swinging member is rotated around the swing shaft (302) due to contact between an end portion of the swinging member and the positioning means (34), and said detection means detects that the processing has been completed when the free end portion of the swing member passes the detection means.

6. An apparatus according to claim 5, wherein the swinging member has a shape such that an arm having the end portion contacting the positioning means (34) and an arm having the free end portion which can pass the detection means are bent with respect to each other in a prescribed form and the arm having the free end portion extends downwards.

7. An apparatus according to claim 6, wherein said detection means is fixed to the supporting means (4, 16, 41) for supporting the lens (1) at a position below the swing shaft (302).

8. An apparatus according to any one of claims 6 and 7, wherein the swinging member has a shape of an inverse L.

## Patentansprüche

1. Vorrichtung zum Bearbeiten einer Linse, die einen Umfangsabschnitt eines Brillenglases (1) gemäß Daten über die Form einer Linsenfassung bearbeitet, wobei die Vorrichtung folgendes einschließt:
a) ein Tragmittel (4, 16, 41) zum Tragen der Linse (1), das frei zu einem Werkzeug (5) hin bewegt werden kann und eine Haltewelle (41), die die Linse (1) solchermaßen hält, dass die Linse (1) frei gedreht werden kann, und ein Winkelerfassungsmittel (145), das einen Drehwinkel der Haltewelle (41) erfasst, aufweist;
b) ein Positionierungsmittel (34), das mit dem Tragmittel (4, 16, 41) zum Tragen der Linse (1) in Kontakt gebracht und von diesem getrennt werden kann und das die Bewegung des Tragmittels (4, 16) für die Linse (1) zu dem Werkzeug (5) in der Stellung, die dem Bearbeitungsmaß der Linse (1) entspricht, das aufgrund des Drehwinkels und der Daten über die Form der Linsenfassung bei dem Drehwinkel erhalten wird, begrenzt;
c) ein Verstärkungsmittel (302) zum Verstärken der relativen Bewegung zwischen dem Tragmittel (4, 16, 41) zum Tragen der Linse (1) und dem Positionierungsmittel (34); und
d) ein Erfassungsmittel, das durch die verstärkte Bewegung erkennt, dass die Bearbeitung, die bei dem Drehwinkel durchzuführen war, abgeschlossen wurde, wenn das Tragmittel (4, 16, 41) zum Tragen der Linse (1) mit dem Positionierungsmittel (34) in Kontakt steht.

2. Vorrichtung nach Anspruch 1, wobei das Werkzeug (5) an einer Stelle direkt unterhalb des Tragmittels (4, 16, 41) zum Tragen der Linse (1) angeordnet ist, wobei das Tragmittel (4, 16, 41) zum Tragen der Linse (1) in vertikaler Richtung frei beweglich ist, und das Positionierungsmittel (34) die Abwärtsbewegung des Tragmittels (4, 16, 41) zum Tragen der Linse (1) in vertikaler Richtung begrenzt.

3. Vorrichtung nach einem der Ansprüche 1 oder 2, wobei das Verstärkungsmittel (302) zum Verstärken einer relativen Bewegung ein Schwingelement aufweist, das ein Mittel berührt, das ausgewählt ist aus dem Tragmittel (4, 16, 41) zum Tragen der Linse (1) und dem Positionierungsmittel (34), und das von einer Schwingerwelle getragen wird, die auf einem anderen Mittel angeordnet ist, das ausgewählt ist aus dem Tragmittel (4, 16, 41) zum Tragen der Linse (1) und dem Positionierungsmittel (34), und der Abstand zwischen der Schwingerwelle und einer Stelle, wo das Schwingelement das Mittel, das ausgewählt ist aus dem Tragmittel (4, 16, 41) zum Tragen der Linse (1) und dem Positionierungsmittel (34) berührt, kleiner eingestellt ist als der Abstand zwischen der Schwingerwelle (302) und dem freien Endabschnitt des Schwingelements.

4. Vorrichtung nach Anspruch 3, wobei das Erfassungsmittel den Durchgang des freien Endabschnitts des Schwingelements erfasst.

5. Vorrichtung nach Anspruch 4, wobei das Schwingelement von der Schwingerwelle (302), die an dem Tragmittel (4, 16, 41) zum Tragen der Linse (1) angeordnet ist, getragen wird, das Schwingelement aufgrund des Kontakts zwischen einem Endabschnitt des Schwingelements und dem Positionierungsmittel (34) um die Schwingerwelle (302) gedreht wird, und das Erfassungsmittel erkennt, dass die Bearbeitung abgeschlossen wurde, wenn der freie Endabschnitt des Schwingelements an dem Erfassungsmittel vorbeigeht.

6. Vorrichtung nach Anspruch 5, wobei das Schwingelement so geformt ist, dass ein Arm, dessen Endabschnitt das Positionierungsmittel (34) berührt, und ein Arm, dessen freier Endabschnitt an dem Erfassungsmittel vorbeigehen kann, in Bezug aufeinander in vorgegebener Form gebogen sind, und dass der Arm mit dem freien Endabschnitt nach unten gerichtet ist.

7. Vorrichtung nach Anspruch 6, wobei das Erfassungsmittel an dem Tragmittel (4, 16, 41) zum Tragen der Linse (1) an einer Stelle unterhalb der Schwingerwelle (302) befestigt ist.

8. Vorrichtung nach einem der Ansprüche 6 oder 7, wobei das Schwingelement die Form eines umgekehrten L aufweist.

## Revendications

1. Dispositif de traitement d'un verre qui traite une partie périphérique d'un verre de lunette (1) selon des données d'une forme d'une monture de lunette, le dispositif comprenant :
a) des moyens de maintien (4, 16, 41) destinés à supporter le verre (1) qui peut être déplacé librement vers un outil (5) et comprend un arbre de maintien (41) qui supporte le verre (1) d'une manière telle que le verre (1) peut être mis en rotation librement et des moyens de détection d'angle (145) qui détectent un angle de rotation de l'arbre de maintien (41) ;
b) des moyens de positionnement (34) qui peuvent être amenés en contact avec et séparés des moyens de maintien (4, 16, 41) destinés à supporter le verre (1) et restreignent-le déplacement des moyens de support (4, 16) du verre (1) vers l'outil (5) à une position correspondant à un degré de traitement du verre (1) qui est obtenu en fonction de l'angle de rotation et des données de la forme de la monture de verre à l'angle de rotation ;
c) des moyens d'amplification (302) destinés à amplifier un déplacement relatif entre lesdits moyens de maintien (4, 16, 41) pour supporter le verre (1) et les moyens de positionnement (34) ; et
d) des moyens de détection qui détectent à travers le déplacement amplifié, que le traitement à mener à l'angle de rotation a été achevé lorsque les moyens de maintien (4, 16, 41) pour supporter le verre (1) entrent en contact avec les moyens de positionnement (34).

2. Dispositif selon la revendication 1, dans lequel l'outil (5) est disposé à une position directement au-dessous des moyens de maintien (4, 16, 41) pour supporter le verre (1), les moyens de maintien (4, 16, 41) pour supporter le verre (1) peuvent être déplacés librement dans un sens vertical, et les moyens de positionnement (34) restreignent le déplacement vers le bas des moyens de maintien (4, 16, 41) pour supporter le verre (1) dans le sens vertical.

3. Dispositif selon l'une quelconque des revendications 1 et 2, dans lequel les moyens d'amplification (302) destinés à amplifier un déplacement relatif comprennent un élément basculant qui entre en contact avec des moyens sélectionnés à partir desdits moyens de maintien (4, 16, 41) pour supporter un verre (1) et les moyens de positionnement (34) et est supporté par un arbre basculant disposé sur d'autres moyens sélectionnés à partir des moyens de maintien (4, 16, 41) pour supporter le verre (1) et les moyens de positionnement (34), et une distance entre l'arbre basculant et une position où l'élément basculant entre en contact avec les moyens sélectionnés à partir des moyens de maintien (4, 16, 41) pour supporter le verre (1) et les moyens de positionnement (34) est définie pour être inférieure à une distance entre l'arbre basculant (302) et une partie d'extrémité libre de l'élément basculant.

4. Dispositif selon la revendication 3, dans lequel les moyens de détection détectent le passage de la partie d'extrémité libre de l'élément basculant.

5. Dispositif selon la revendication 4, dans lequel l'élément basculant est supporté par l'arbre basculant (302) disposé au niveau des moyens de maintien (4, 16, 41) pour supporter le verre (1), l'élément basculant est mis en rotation autour de l'arbre basculant (302) en raison du contact entre une partie d'extrémité de l'élément basculant et les moyens de positionnement (34), et lesdits moyens de détection détectent que le traitement a été achevé lorsque la partie d'extrémité libre de l'élément basculant passe devant les moyens de détection.

6. Dispositif selon la revendication 5, dans lequel l'élément basculant présente une forme telle qu'un bras ayant la partie d'extrémité entrant en contact avec les moyens de positionnement (34) et un bras ayant la partie d'extrémité libre qui peut passer devant les moyens de détection sont courbés l'un par rapport à l'autre selon une forme prédéterminée et le bras ayant la partie d'extrémité libre s'étend vers le bas.

7. Dispositif selon la revendication 6, dans lequel lesdits moyens de détection sont fixés aux moyens de maintien (4, 16, 41) pour supporter le verre (1) à une position au-dessous de l'arbre basculant (302).

8. Dispositif selon l'une quelconque des revendications 6 et 7, dans lequel l'élément basculant présente une forme de L inversé.
